# EUROPÄISCHE PATENTSCHRIFT

(11) **EP 3 141 104 B1**
(45) Veröffentlichungstag und Bekanntmachung des Hinweises auf die Patenterteilung: **18.04.2018**
(21) Anmeldenummer: 16001945.1
(22) Anmeldetag: 07.09.2016
(51) Int. Cl.: A01D 45/02

(54) **MAISPFLÜCKER MIT SCHWADABLAGEVORRICHTUNG**
PICKER WITH MOWN CROP STORAGE DEVICE
CUEILLEUR À MAÏS AVEC DISPOSITIF D'ANDAINAGE

(30) Priorität: 08.09.2015 DE 102015115084
(43) Veröffentlichungstag der Anmeldung: 15.03.2017
(73) Patentinhaber: Carl Geringhoff GmbH & Co. KG, 59227 Ahlen (DE)
(72) Erfinder: Baye, Dietrich, 49492 Westerkappeln (DE); Schlamann, Frank, 48599 Gronau (DE)
(74) Vertreter: Weeg, Thomas

(56) Entgegenhaltungen:
- EP-A1- 1 000 533
- DE-A1- 3 727 535
- DE-U1- 7 905 774
- US-A- 4 581 878

## Beschreibung

Die vorliegende Erfindung bezieht sich auf eine Vorrichtung zur Ernte von stängeligem Halmgut, mit einer Pflückvorrichtung, einer Fördervorrichtung zur Abförderung von gepflückten Fruchtständen, einer in einer Ebene unterhalb der Pflückvorrichtung angeordneten Häckselvorrichtung zum Schneiden von Stängeln, die zumindest ein in einer horizontalen oder zumindest annähernd horizontalen Ebene rotierend umlaufendes Messer aufweist, einer in Abwurfrichtung der Häckselvorrichtung angeordneten Auffangwanne und einer im Bereich der Auffangwanne angeordneten Querfördereinrichtung, wobei im Gutfluss zwischen der Häckselvorrichtung und der Auffangwanne ein Leitblech angeordnet ist.

Vorrichtungen mit in einer vertikalen Ebene umlaufenden Messern sind beispielsweise aus den Schriften DE 79 05 774 U1 und DE 37 27 535 A1 bekannt. Die dort offenbarten Häckselvorrichtungen verfügen über Leitbleche, mit denen der Gutstrom aus dem Häcksler auf den Boden geleitet wird. Eine weitere Vorrichtung ist aus der Schrift US 4,581,878 bekannt. Eine andere gattungsgemäße Vorrichtung wird unter dem Namen Mais Star Collect von der Fa. Geringhoff hergestellt und vertrieben. Diese Vorrichtung pflückt in einem Arbeitsgang die Maiskolben mit dem Körnermais von den Stängeln und legt das Stroh im Schwad ab. Die vom Stängel abgetrennten Maiskolben werden mit der Fördervorrichtung einer Dreschvorrichtung zugeführt. Die Schwadablage erfolgt mit der Querfördervorrichtung, die das von den Maiskolben getrennte und aus den gehäckselten Stängeln und Blättern bestehende Maisstroh sammelt, quer zur Fahrtrichtung abfördert und während der Vorfahrt der Erntemaschine auf dem Boden ablegt. Das Fördersystem, das beispielsweise mit gekröpften Häckslermessern und einer dahinterliegenden Wanne mit integrierter Förderschnecke ausgestattet sein kann, legt das Erntegut je nach gewählter Teilung und Förderrichtung der Querfördereinrichtung unter oder neben dem Mähdrescher in einem Schwad ab. Anstelle einer Förderschnecke können auch andere Fördertechniken wie beispielsweise ein Bandförderer verwendet werden.

Die Auffangwanne und die Querfördereinrichtung können insbesondere mittig in zumindest zwei Teile geteilt sein. Die beiden Teile der Querfördervorrichtung fördern dann bei einer gegenläufigen Förderrichtung das aufgefangene Maisstroh von den äußeren Seiten nach innen, so dass das Schwad in der Mitte der Vorrichtung abgelegt wird und die Räder der Erntemaschine, die die Vorrichtung als Erntevorsatz trägt, nicht über das Schwad fahren und dieses dabei in den Boden drücken muss. Die ausgedroschenen Spindeln und Lieschen werden dann nach der Überfahrt des Schwads mit der Erntemaschine laufend von dieser oben auf dem Schwad abgelegt. Die im Schwad abgelegten Restpflanzen-Bestandteile des Maisstrohs können dann in einem weiteren Arbeitsgang von Ballenpressen aufgenommen werden, die das Erntegut für eine effiziente Logistik zur Weiterverarbeitung verdichten. Das Schwad kann auch von einem mit einer Pick-up ausgerüsteten Feldhäcksler aufgenommen und in nebenher fahrende Transportfahrzeuge geblasen werden. Das so aufgenommene Maisstroh ist für Betriebe mit Biogasanlagen als Gärsubstrat interessant. Das so geerntete Material kann den Anlagen nach dem Silierprozess ohne weitere Verarbeitung zugeführt werden. Bei einer Bergung des Maisstrohs mit Kurzschnittladewagen kann das Maisstroh in Betrieben zur Fütterung von Jungvieh oder im trockenen Zustand zur Einstreu verwendet werden. Es bestehen also vielfältige sinnvolle Verwendungsmöglichkeiten für das aufgefangene und aufgesammelte Maisstroh.

Nun ist es so, dass das Maisstroh trotz der vorteilhaften Verwertungsmöglichkeiten auf einzelnen Flächen auf herkömmliche Weise gehäckselt breit auf dem Boden abgelegt und untergepflügt werden soll. Das ist mit der gattungsgemäßen Vorrichtung allerdings nicht möglich, oder es wären zumindest erhebliche Umbauarbeiten erforderlich, die nicht wirtschaftlich durchzuführen sind.

Demgemäß ist es die Aufgabe der vorliegenden Erfindung, eine Vorrichtung zu schaffen, mit der das Maisstroh wahlweise gesammelt und in einem Schwad abgelegt oder ohne eine besondere Sammlung direkt auf den Boden abgeworfen werden kann.

Die Aufgabe wird für eine gattungsgemäße Vorrichtung gelöst, indem das Leitblech zwischen einer Offenstellung und einer Schließstellung verstellbar und in diesen beiden Stellungen arretierbar ist, wobei das Leitblech den Gutfluss von der Häckselvorrichtung zur Auffangwanne in der Schließstellung versperrt und in der Offenstellung freigibt.

Durch das Leitblech kann die Vorrichtung auf einfache Weise je nach Wunsch auf eine Betriebsart eingestellt werden, bei der das Maisstroh entweder gesammelt und als Schwad zusammengeführt auf dem Boden abgelegt oder ohne eine Sammlung direkt auf den Boden abgeworfen wird. Es genügt, dazu das Leitblech in die Offen-oder Schließstellung zu stellen. Das Leitblech ist kostengünstig herstellbar, leicht montierbar und nahezu wartungsfrei. Es genügt eine gelegentliche Reinigung.

In dieser Beschreibung ist zwar aus Vereinfachungsgründen von einem Leitblech die Rede, was auf einen metallischen Werkstoff hinweisen könnte, allerdings kann das Leitblech auch aus anderen Materialien hergestellt sein, wie beispielsweise aus einem Kunststoff, einem faserverstärkten Material oder dergleichen. Wenn in dieser Beschreibung von vorne oder hinten die Rede ist, so ist mit dem Begriff vorne eine Position in Vorfahrtrichtung der Erntemaschine in den stehenden Bestand des zu erntenden Ernteguts hinein und mit dem Begriff hinten eine Position entgegen der Vorfahrtrichtung der Erntemaschine in eine dem stehenden Bestand abgewandten Richtung hin gemeint.

Nach einer Ausgestaltung der Erfindung ist das Leitblech mit der Auffangwanne über eine Schwenkachse verbunden und verlängert in seiner Offenstellung die nach vorne weisende Kante der Auffangwanne auf die Häckselvorrichtung zu. Durch die Verlängerung der Auffangwanne um die Länge des Leitblechs wird der Abstand zwischen der Abgabeöffnung der Häckselvorrichtung und der Auffangwanne verkürzt. Dies verringert die potentiellen Erntegutverluste. Umgekehrt bedeutet die Verlängerung der Auffangwanne in der Offenstellung, dass der Abstand zwischen der Auffangwanne und der Häckselvorrichtung in der Schließstellung des Leitblechs vergrößert ist, wodurch mehr Raum für die Abförderung des Ernteguts auf den Boden verfügbar ist.

Die Wurfleistung der Häckselvorrichtung kann durch eine geeignete Gestaltung der Häckselmesser unterstützt werden. So ist es beispielsweise möglich, in Rotationsrichtung der umlaufenden Messer gesehen an der Hinterkante der Messer einen oder mehrere aufstehende Schenkel auszubilden, die bei einer Drehbewegung der Häckselvorrichtung als eine Wurfleiste wirken. Vorteilhaft ist der aufstehende Schenkel auf der Unterseite eines Messers ausgebildet, da nur die Pflanzenteile, die bereits abgeschnitten sind, nach dem Abschneiden von übrigen Pflanzenteilen frei in Richtung der Querfördereinrichtung abgeworfen werden können.

Nach einer Ausgestaltung der Erfindung reicht das Leitblech in seiner Offenstellung mit seiner nach vorne weisenden Kante bis in einen Bereich unterhalb der Häckselvorrichtung. Durch die große Länge des Leitblechs können Erntegutreste beim Betrieb der Erntemaschine kaum an dem Leitblech vorbei auf den Boden fallen und dadurch verlustig gehen. Ein bis in den Bereich der Häckselvorrichtung reichender seitlich zumindest nach unten hin begrenzter Förderkanal stellt auch sicher, dass der Luftstrom, in dem sich die Partikel des Ernteguts bewegen, gleichmäßiger strömen kann, ohne durch irgendwelche Winde in der Maschine beeinträchtigt zu sein.

Nach einer Ausgestaltung der Erfindung ist das verstellbare Leitblech in seiner Offenstellung in einem Winkel zwischen -10° bis 30° um die Schwenkachse herum zur horizontalen Ebene in Richtung der Häckselvorrichtung arretierbar. Es können nur ein einziger oder auch mehrere Arretierungsstellungen in der Offenstellung vorgesehen sein. Mehrere Arretierungsstellungen sind vorteilhaft, um die Schwenkstellung des Leitblechs an verschiedene Erntebedingungen anpassen zu können.

Nach einer Ausgestaltung der Erfindung ist das Leitblech in einem sich zur Abwurfrichtung des Häckselgutes aus der Häckselvorrichtung öffnenden Winkel von 10° bis 30° zur Senkrechten angestellt. Durch den Anstellwinkel des Leitblechs ergibt sich eine Art Auffangtrichter, in den die Häckselvorrichtung das Häckselgut hineinbläst. Durch den Auffangtrichter kann das Häckselgut verlustfrei aufgefangen und abgefördert werden.

Nach einer Ausgestaltung der Erfindung befindet sich das Leitblech in der Offenstellung in einer zumindest annähernd waagerechten Lage. Mit der zumindest annähernd waagerechten Lage ist eine Lage gemeint, die genau waagerecht ist oder bei der das leitblech in einem Winkel von bis zu 10° zur Waagerechten positioniert ist. Durch die zumindest annähernd waagerechte Lage wird verhindert, dass Erntegut, das auf das Leitblech fällt, nach vorne hin vom Leitblech abrutschen kann und nicht mehr in den Bereich der Querfördereinrichtung gelangt. In einem Kollisionsfall mit einem Hindernis kann das Leitblech aus einer zumindest annähernd waagerechten Lage leichter nach oben ausweichen, bei einer abgesenkten Vorderkante würde das Leitblech bei einem Anstoß an ein Hindernis nach unten gerissen und abreißen. Bei einer zu stark angehobenen Position der Vorderkante des Leitblechs besteht das Risiko, dass das Leitblech nicht mehr wie ein Trichter auch die sich im Randbereich des Gutstroms bewegenden Partikel des Häckselguts auffangen kann.

Nach einer Ausgestaltung der Erfindung bildet das Leitblech in seiner Schließstellung mit seiner der Häckselvorrichtung zugewandten Fläche eine Leitfläche, die gegenüber dem Gutstrom in einem Winkel angestellt ist, bei dem das von der Häckselvorrichtung abgeworfene Erntegut bei einem Kontakt mit der Leitfläche einen Kraftimpuls bekommt, durch den die Bewegungsbahn des Ernteguts nach unten auf den Boden zu umgelenkt ist. Die Leitfläche unterstützt auf diese Weise die Abförderung des Maisstrohs auf den Boden, es können sich keine Materialansammlungen bilden, die einen Förderweg verstopfen und mühsam manuell wieder beseitigt werden müssen. Die Bewegungsenergie, über die das Maisstroh verfügt, wenn es die Häckselvorrichtung verlässt, wird so nicht vernichtet, sondern bleibt weitgehend erhalten. Das ist für eine möglichst gleichmäßige Breitverteilung des Maisstrohs wichtig, da sonst die Partikel nicht mehr so weit fliegen und sich im Wurfbild Bahnen bilden würden, die nachteilig sind für die Düngung und den Aufwuchs der Folgefrucht.

Nach einer Ausgestaltung der Erfindung ist das freie Ende des Leitblechs in seiner Schließstellung nach oben geschwenkt. Wenn das Leitblech nach oben verschwenkt wird, bleibt die volle Bodenfreiheit der Vorrichtung erhalten. Das freie Ende kann dabei dichtend an andere Bauteile der Maschine angelegt werden, wodurch ein Materialaufbau von Erntegut im vorderen Bereich der Auffangwanne vermieden wird. Nach einer Ausgestaltung der Erfindung ist das Leitblech neben der Offenstellung und der Schließstellung auch in einer Zwischenstellung arretierbar. Die Zwischenstellung bedeutet, dass der Gutfluss zwischen der Häckselvorrichtung und der Auffangwanne je nach Stellung des Leitblechs mehr oder weniger zwischen der Auffangwanne und dem Boden aufgeteilt wird. Das kann sinnvoll sein, wenn ein Teil der Biomasse aus dem Erntegut zur Bodenverbesserung genutzt werden soll, indem er auf den Boden und in nachfolgenden Bearbeitungsgängen in den Boden eingearbeitet wird, aber ein anderer Teil nicht zur Bodenverbesserung benötigt und deshalb gesammelt und auf andere Weise verwertet wird. Eine solche Verteilung des gehäckselten Ernteguts ist mit der herkömmlichen Technik nicht möglich.

Nach einer Ausgestaltung der Erfindung ist das Leitblech motorisch fernbetätigt verstellbar. Hierdurch kann die Verstellung in der Fahrerkabine der Erntemaschine über die Betätigung von Bedienknöpfen vorgenommen werden, ohne dass der Fahrer dafür die Fahrerkabine verlassen muss. Es ist auch eine automatisierte Verstellung und Regelung durch eine Regelelektronik während der Ernte auf einem Feld möglich, ohne dass der Fahrer darin eingreifen müsste. Die Ablagemengen an Maisstroh werden bei dieser Variante beispielsweise durch eine Düngekarte oder eine Karte zur Planung einer Humusbilanz vorgegeben.

Nach einer Ausgestaltung der Erfindung ist das Leitblech in vorgewählten Zeittakten für eine bestimmte Dauer und Schwenkgeschwindigkeit motorisch aus der Offenstellung in die Schließstellung und wieder zurück verschwenkbar. Das Leitblech wird auf diese Weise als ein Zwangsförderer genutzt, der Materialansammlungen im vorderen Bereich der Auffangwanne in den Wirkbereich der Querfördereinrichtung schiebt. Zwar ist dadurch der Gutfluss von der Häckselvorrichtung zur Auffangwanne kurzzeitig unterbrochen. Die zeitgetaktete Verschwenkung kann sich aber lohnen, wenn dadurch Verstopfungen im vorderen Bereich der Auffangwanne vermieden werden, bei denen auch zwangsläufig Erntegut nicht mehr von der Auffangwanne aufgefangen und anschließend quer gefördert wird.

Nach einer Ausgestaltung der Erfindung ist das verstellbare Leitblech im Schwadablagebereich der Vorrichtung unterbrochen. Der Schwadablagebereich kann sich im mittleren Bereich und/oder seitlichen Endbereich des Maispflückers befinden, ja nachdem, wohin die Querfördereinrichtung das aufgefangene Erntegut befördert und abgibt. Durch die Unterbrechung kann das gehäckselte Erntegut direkt in das Schwad geblasen werden, es muss nicht gesondert von der Querfördereinrichtung abgefördert werden.

Nach einer Ausgestaltung der Erfindung weist das verstellbare Leitblech eine oder mehrere Teilungen auf und die einzelnen Teilungen des verstellbaren Leitblechs sind unabhängig voneinander verstellbar. Durch die unabhängige Verstellbarkeit können Teilbreiten der Vorrichtung mit abgeworfenem Häckselgut bestreut werden, während das Häckselgut aus anderen Teilbereichen zu einem Schwad zusammengeführt wird. Bei Wurfweiten der einzelnen Häckselvorrichtungen in Querrichtung, die über die Breite der einer Häckselvorrichtung zugeordneten Teilung hinausgeht, kann je nach Schwenkstellung der Teilungen des verstellbaren Leitblechs eine dünnere Lage des Häckselguts in einer annähernd gleichmäßigen Querverteilung auf dem Feld verbleiben, beispielsweise als Dünger, während der andere Teil als Schwad vom Feld aufgenommen und einer anderen Verwendung zugeführt werden kann. Ein geteiltes verstellbares Leitblech ist auch schneller und kostengünstiger zu reparieren, wenn in einem Schadensfall nur eines der geteilten Stücke des Leitblechs ausgetauscht werden muss.

Es wird ausdrücklich darauf hingewiesen, dass die vorstehend erläuterten Ausgestaltungen der Erfindung jeweils für sich, aber auch in einer beliebigen Kombination miteinander mit dem Gegenstand des Hauptanspruchs kombinierbar sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Schnittansicht von der Seite auf die Erntevorrichtung, bei der sich das Leitblech in der Offenstellung befindet, und
- Fig. 2:: eine Schnittansicht von der Seite auf die Erntevorrichtung, bei sich das Leitblech in der Schließstellung befindet.

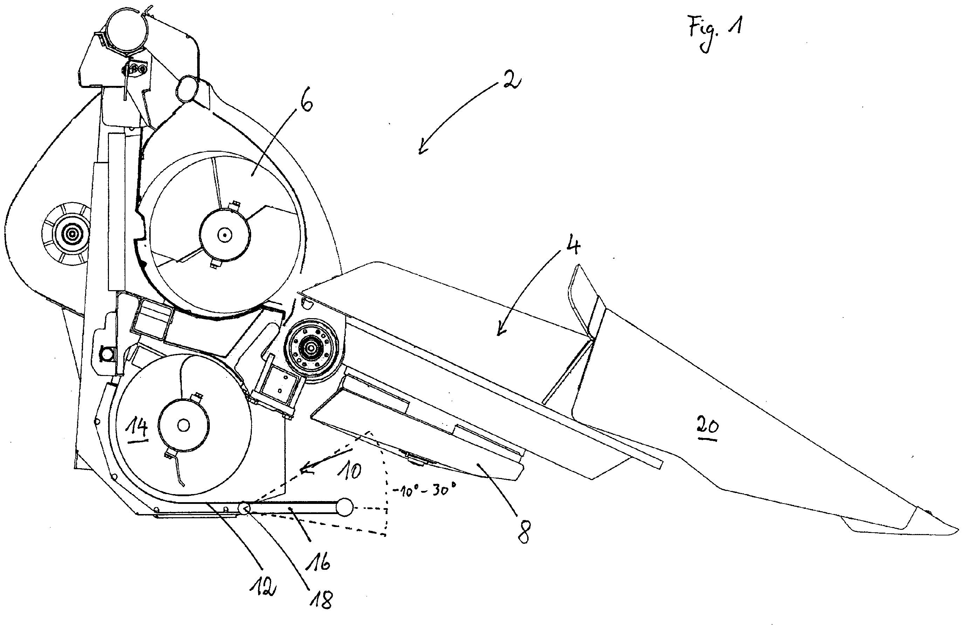

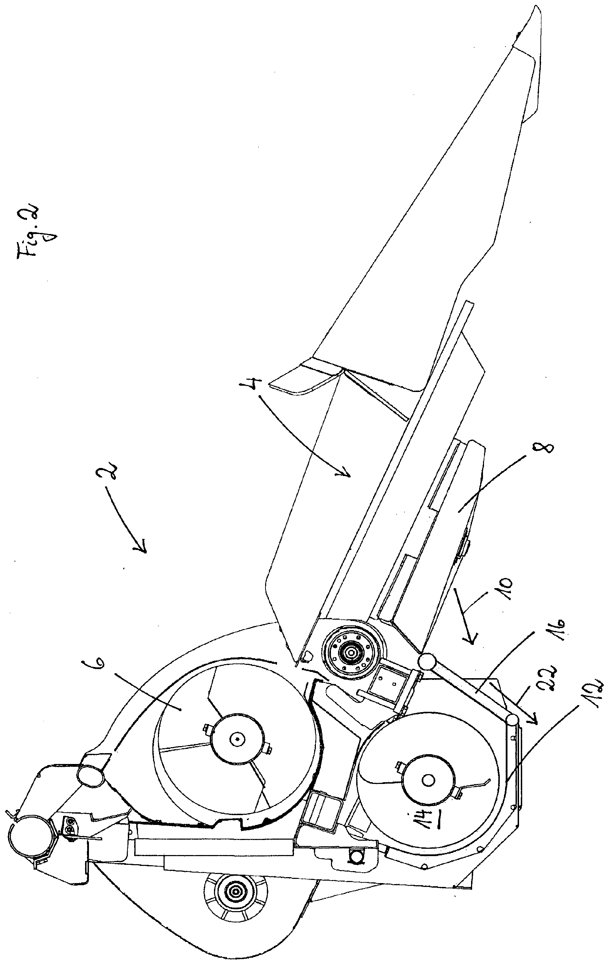

In Fig. 1 ist eine Schnittansicht von der Seite auf einen Maispflücker als Vorrichtung 2 gezeigt. Im Bereich der Pflückvorrichtung 4 werden die bei der Vorfahrt der Erntemaschine in den von seitlichen Pflückplatten begrenzten Pflückspalt von Pflückwalzen erfasst, die sich unterhalb der Pflückplatten befinden. Dabei werden die Maiskolben von den an den Pflückspalt anstoßenden Kanten der Pflückplatten vom Stängel abgestreift. Die vom Stängel gelösten Maiskolben werden sodann von einer Fördervorrichtung 6 der Erntemaschine wie beispielsweise einem Mähdrescher zugeführt. In den beiden Figuren 1 und 2 ist mit der Ziff. 6 eine Förderschnecke bezeichnet, im Bereich der Pflückvorrichtung 4 befinden sich allerdings auch noch Kettenförderer mit Mitnehmern, die die gepflückten Maiskolben der Förderschnecke zufördern.

Unterhalb der Pflückvorrichtung 4 befindet sich eine Häckselvorrichtung 8. Im gezeigten Ausführungsbeispiel besteht die Häckselvorrichtung 8 aus zwei Häckselmessern, die an einer Messerwelle befestigt sind und mit hoher Drehzahl während des Betriebs der Erntemaschine umlaufen. Die Häckselmesser schneiden die Maisstängel bodennah ab, zerhäckseln allerdings auch die Erntegutstängel, die von den Pflückwalzen nach unten gerissen werden. Dazu ist die Häckselvorrichtung 8 etwa unterhalb der Pflückvorrichtung 4 angeordnet.

Die Maisstängel und Blattteile, die von der Häckselvorrichtung 8 erfasst und geschnitten werden, werden in die Abwurfrichtung 10 in die Auffangwanne 12 geschleudert, die Auffangwanne 12 wird von einer Querfördereinrichtung 14 überstrichen, um das dort aufgefangene Häckselgut in eine Richtung quer zur Fortfahrtrichtung der Erntemaschine in den stehenden Bestand abzufördern. Dabei kann die Querfördereinrichtung 14 so angetrieben sein, dass das Häckselgut von außen in die Maschinenmitte gefördert wird, um dort ein Schwad zu bilden, oder die Querfördereinrichtung erstreckt sich beispielsweise über die gesamte Breite der Maschine, um das Häckselgut an einer Seite der Vorrichtung 2 auf dem Boden abzulegen.

In Fig. 1 ist im Gutfluss zwischen der Häckselvorrichtung 6 und der Auffangwanne 12 ein verstellbares Leitblech 16 angeordnet, das in Fig. 1 in einer Offenstellung gezeigt ist. In der Offenstellung kann das Häckselgut der Abwurfrichtung 10 folgend ungehindert in den Bereich der Auffangwanne 12 gelangen und dort von der Querfördereinrichtung 14 abgefördert werden. Das Leitblech 16 ist mit der Auffangwanne 12 über eine Schwenkachse 18 schwenkbar verbunden. Im Ausführungsbeispiel befindet sich die Schwenkachse 18 an der Vorderkante der Auffangwanne 12. Das Leitblech 16 verlängert in der in Fig. 1 gezeigten Offenstellung die Vorderkante der Auffangwanne 12 in die Richtung der Häckselvorrichtung 6. Dabei ist das Leitblech 16 in der Offenstellung in einem Winkel von etwa 20° zur Abwurfrichtung 10 des Häckselgutes aus der Häckselvorrichtung 8 angestellt. Dadurch bildet das Leitblech 16 im Verhältnis zur Abwurfrichtung 10 des Häckselgutes zumindest zum Boden hin eine Art Trichter, mit dem der gesamte Gutstrom des Häckselgutes einschließlich der streuenden Ränder sicher aufgefangen werden kann. Dies wird auch dadurch unterstützt, dass das Leitblech in seiner Offenstellung mit seiner nach vorne weisenden Kante bis in einen Bereich unterhalb der Häckselvorrichtung 6 reicht.

In der Fig. 1 ist auch erkennbar, dass sich das Leitblech 16 in der Offenstellung in einer zumindest annähernd waagerechten Lage befindet. Die Vorderkante des Leitblechs 16 zeigt dabei in etwa auf die bodennahe Spitze der Pflückerhaube 20. Wenn die Pflückerhaube 20 mit ihrer Spitze bei einem Anstoß gegen einen Stein nach oben hin hochschwenken sollte und ein Stein sodann die Vorderkante des Leitblechs 16 trifft, kann das Leitblech 16 mit seiner Vorderkante durch eine Schwenkbewegung nach oben hin ausweichen. Ein Abriss des Leitblechs 16 wird dadurch vermieden. Bei der annähernd waagerechten Schwenklage des Leitblechs 16 in der Offenstellung wird auch vermieden, dass Häckselgut, das sich im vorderen Bereich des Leitblechs 16 ablagert, nach schräg unten vom Leitblech 16 abrutschen kann.

In Fig. 2 ist das Leitblech 16 in seiner Schließstellung gezeigt. In der Schließstellung bildet die Unterseite des Leitblechs 16 eine Leitfläche, an dem der Gutstrom des Häckselguts entlang in Richtung des Bodens umgelenkt wird. Durch die Umlenkwirkung des Leitblechs 16 in der Schließstellung wird der Gutstrom aus der Abwurfrichtung 10 in die Bodenwurfrichtung 22 umgelenkt. In der Schließstellung bildet die Unterseite des Leitblechs 16 als Leitfläche durch ihren Anstellwinkel zur Abwurfrichtung 10 ebenfalls eine Art einseitigen Trichter, durch den das von der Häckselvorrichtung 6 abgeworfene Häckselgut nach unten auf den Boden zu umgelenkt wird.

In der in Fig. 2 gezeigten Schließstellung ist das freie Ende des Leitblechs 26 nach oben geschwenkt. Dabei schlägt es mit seinem freien Ende an andere Teile der Vorrichtung 2 an und bildet auf diese Weise einen Verschluss, durch den kein Häckselgut mehr aus der Häckselvorrichtung 8 in den Bereich der Auffangwanne 12 und der Querfördereinrichtung 14 gelangen kann.

In den Fig. 1 und 2 sind zeichnerisch keine Zwischenstellungen gezeigt, in denen das Leitblech 16 auch arretiert werden könnte. Aus einem Abgleich der Darstellungen in den Fig. 1 und 2 ist aber erkennbar, dass bei einer Schwenkstellung des Leitblechs 16 etwa in der Mitte zwischen der Offen- und Schließstellung das aus der Häckselvorrichtung 8 abgeworfene Häckselgut etwa zur Hälfte in den Bereich der Auffangwanne 12 und der Querfördereinrichtung 14 gelangt und zur anderen Hälfte auf den Boden geworfen wird. Somit ist es möglich, je nach Winkelstellung des Leitblechs 16 mehr oder weniger Häckselgut in das Schwad gelangen zu lassen oder nicht.

Das Leitblech 16 kann manuell oder motorisch verstellbar ausgebildet sein. Bei einer motorischen Verstellbarkeit ist eine Fernverstellung aus der Kabine der Erntemaschine heraus oder von einer Bedienstation an der Vorrichtung 2 selbst vorteilhaft. Bei einer motorischen Verstellbarkeit ist es auch möglich, das Leitblech 16 zeitgetaktet kurz anzuheben, um dadurch auf der Vorderkante des Leitblechs angesammeltes Häckselgut auf die Auffangwanne 12 zu werfen.

Das vorstehend beschriebene Ausführungsbeispiel dient nur der Erläuterung der Erfindung. Die Erfindung ist nicht auf das gezeigte Ausführungsbeispiel beschränkt. Dem Fachmann bereitet es keine Schwierigkeiten, das Ausführungsbeispiel auf eine ihm als geeignet erscheinende Art abzuwandeln, um es an einen konkreten Anwendungsfall anzupassen.

## Patentansprüche

1. Vorrichtung (2) zur Ernte von stängeligem Halmgut, mit einer Pflückvorrichtung (4), einer Fördervorrichtung zur Abförderung von gepflückten Fruchtständen, einer in einer Ebene unterhalb der Pflückvorrichtung (4) angeordneten Häckselvorrichtung (6) zum Schneiden von Stängeln, die zumindest ein in einer horizontalen oder zumindest annähernd horizontalen Ebene rotierend umlaufendes Messer aufweist, einer in Abwurfrichtung (10) der Häckselvorrichtung (6) angeordneten Auffangwanne (12) und einer im Bereich der Auffangwanne (12) angeordneten Querfördereinrichtung (14), wobei im Gutfluss zwischen der Häckselvorrichtung (6) und der Auffangwanne (12) ein Leitblech (16) angeordnet ist, **dadurch gekennzeichnet, dass** das Leitblech (16) zwischen einer Offenstellung und einer Schließstellung verstellbar und in diesen beiden Stellungen arretierbar ist, wobei das Leitblech (16) den Gutfluss von der Häckselvorrichtung (6) zur Auffangwanne (12) in der Schließstellung versperrt und in der Offenstellung freigibt.

2. Vorrichtung (2) nach Anspruch 1, **dadurch gekennzeichnet, dass** das Leitblech (16) mit der Auffangwanne (12) über eine Schwenkachse (18) verbunden ist und das Leitblech (16) in seiner Offenstellung die nach vorne weisende Kante der Auffangwanne (12) auf die Häckselvorrichtung (6) zu verlängert.

3. Vorrichtung (2) nach Anspruch 1 oder 2, **dadurch gekennzeichnet, dass** das Leitblech (16) in seiner Offenstellung mit seiner nach vorne weisenden Kante bis in einen Bereich unterhalb der Häckselvorrichtung (6) reicht.

4. Vorrichtung (2) nach einem der vorhergehenden Ansprüche, **dadurch gekennzeichnet, dass** das verstellbare Leitblech (16) in seiner Offenstellung in einem Winkelbereich zwischen -10° bis 30° um die Schwenkachse (18) herum zur horizontalen Ebene in Richtung der Häckselvorrichtung (6) arretierbar ist.

5. Vorrichtung (2) nach einem der vorhergehenden Ansprüche, **dadurch gekennzeichnet, dass** das Leitblech (16) in einem sich zur Abwurfrichtung des Häckselgutes aus der Häckselvorrichtung (8) öffnenden Winkel von 10° bis 30° zur Senkrechten schräg angestellt ist.

6. Vorrichtung (2) nach einem der vorhergehenden Ansprüche, **dadurch gekennzeichnet, dass** sich das Leitblech (16) in der Offenstellung in einer zumindest annähernd waagerechten Lage befindet.

7. Vorrichtung (2) nach einem der vorhergehenden Ansprüche, **dadurch gekennzeichnet, dass** das Leitblech (16) in seiner Schließstellung mit seiner der Häckselvorrichtung (6) zugewandten Fläche eine Leitfläche bildet, die gegenüber dem Gutstrom in einem Winkel angestellt ist, bei dem das von der Häckselvorrichtung (6) abgeworfene Erntegut bei einem Kontakt mit der Leitfläche einen Kraftimpuls bekommt, durch den die Bewegungsbahn des Ernteguts nach unten auf den Boden zu umgelenkt ist.

8. Vorrichtung (2) nach einem der vorhergehenden Ansprüche, **dadurch gekennzeichnet, dass** das freie Ende des Leitblechs (16) in seiner Schließstellung nach oben geschwenkt ist.

9. Vorrichtung (2) nach einem der vorhergehenden Ansprüche, **dadurch gekennzeichnet, dass** das Leitblech (16) neben der Offenstellung und der Schließstellung auch in einer Zwischenstellung arretierbar ist.

10. Vorrichtung (2) nach einem der vorhergehenden Ansprüche, **dadurch gekennzeichnet, dass** das Leitblech (16) motorisch fernbetätigt verstellbar ist.

11. Vorrichtung (2) nach einem der vorhergehenden Ansprüche, **dadurch gekennzeichnet, dass** das Leitblech (16) in vorgewählten Zeittakten für eine bestimmte Dauer motorisch aus der Offenstellung in die Schließstellung und wieder zurück verschwenkbar ist.

12. Vorrichtung (2) nach einem der vorhergehenden Ansprüche, **dadurch gekennzeichnet, dass** das verstellbare Leitblech (16) im Schwadablagebereich der Vorrichtung (2) unterbrochen ist.

13. Vorrichtung (2) nach einem der vorhergehenden Ansprüche, **dadurch gekennzeichnet, dass** das verstellbare Leitblech (16) eine oder mehrere Teilungen aufweist und die einzelnen Teilungen des verstellbaren Leitblechs (16) unabhängig voneinander verstellbar sind.

## Claims

1. Device (2) for harvesting stalk crops, comprising a picking device (4), a conveying device for conveying picked fruits, a chopping device (6) for cutting stalks arranged in a plane underneath the picking device (4), which chopping device comprises at least one blade rotating in a horizontal or at least approximately horizontal plane, a catch pan (12) arranged in the direction of discharge (10) of the chopping device (6), and a transverse conveying apparatus (14) arranged in the region of the catch pan (12), a baffle (16) being arranged in the crop flow between the chopping device (6) and the catch pan (12), **characterised in that** the baffle (16) can be adjusted between an open position and a closed position and can be locked in either position, the baffle (16) blocking the crop flow from the chopping device (6) to the catch pan (12) in the closed position and unblocking said crop flow in the open position.

2. Device (2) according to claim 1, **characterised in that** the baffle (16) is connected to the catch pan (12) via a swivel pin (18) and in the open position, the baffle (16) extends the forward-pointing edge of the catch pan (12) towards the chopping device (6).

3. Device (2) according to either claim 1 or claim 2, **characterised in that** in the open position, the forward-pointing edge of the baffle (16) extends into a region underneath the chopping device (6).

4. Device (2) according to any of the preceding claims, **characterised in that** in the open position, the adjustable baffle (16) can be locked in an angle range of between -10° and 30° about the swivel pin (18) relative to the horizontal plane towards the chopping device (6).

5. Device (2) according to any of the preceding claims, **characterised in that** the baffle (16) is inclined to the vertical at an angle, opening to the direction of discharge of the chopped crops from the chopping device (8), of from 10° to 30°.

6. Device (2) according to any of the preceding claims, **characterised in that** in the open position, the baffle (16) is in an at least approximately horizontal position.

7. Device (2) according to any of the preceding claims, **characterised in that** in the closed position, the side of the baffle (16) facing the chopping device (6) forms a guide surface that is set at an angle relative to the crop flow at which the harvested crop discharged by the chopping device (6) receives a force pulse when said crop comes into contact with the guide surface, by means of which force pulse the movement path of the harvested crop is diverted downwards towards the ground.

8. Device (2) according to any of the preceding claims, **characterised in that** in the closed position, the free end of the baffle (16) is pivoted upwards.

9. Device (2) according to any of the preceding claims, **characterised in that** the baffle (16) can also be locked in an intermediate position, in addition to the open position and the closed position.

10. Device (2) according to any of the preceding claims, **characterised in that** the baffle (16) can be adjusted remotely by a motor.

11. Device (2) according to any of the preceding claims, **characterised in that** the baffle (16) can be pivoted by a motor from the open position into the closed position and back in pre-set time slices for a specific period.

12. Device (2) according to any of the preceding claims, **characterised in that** the adjustable baffle (16) is stopped in the swath-depositing region of the device (2).

13. Device (2) according to any of the preceding claims, **characterised in that** the adjustable baffle (16) has one or more pitches and the individual pitches of the adjustable baffle (16) can be adjusted mutually independently.

## Revendications

1. Dispositif (2) de récolte de céréales à tige, comprenant un dispositif cueilleur (4), un dispositif de transport destiné à emporter des infrutescences cueillies, un dispositif hacheur (6) disposé dans un plan au-dessous du dispositif cueilleur (4) et destiné à couper les tiges, lequel dispositif hacheur comporte au moins un couteau rotatif tournant dans un plan horizontal ou au moins à peu près horizontal, un bac de collecte (12) disposé dans la direction d'éjection (10) du dispositif hacheur (6) et un dispositif de transport transversal (14) disposé au niveau du bac de collecte (12), une plaque de guidage (16) étant disposée dans le flux de récolte entre le dispositif hacheur (6) et le bac de collecte (12), **caractérisé en ce que** la plaque de guidage (16) peut être réglée entre une position ouverte et une position fermée et être bloquée dans ces deux positions, la plaque de guidage (16) bloquant en position fermée, et libérant en position ouverte, le flux de récolte du dispositif hacheur (6) au bac de collecte (12).

2. Dispositif (2) selon la revendication 1, **caractérisé en ce que** la plaque de guidage (16) est reliée au bac de collecte (12) par le biais d'un axe de pivotement (18) et la plaque de guidage (16) prolonge, dans sa position ouverte, le bord, dirigé vers l'avant, du bac de collecte (12) en direction du dispositif hacheur (6) étendu.

3. Dispositif (2) selon la revendication 1 ou 2, **caractérisé en ce que** la plaque de guidage (16) s'étend, dans sa position ouverte, avec son bord dirigé vers l'avant, jusque dans une région située au-dessous du dispositif hacheur (6).

4. Dispositif (2) selon l'une des revendications précédentes, **caractérisé en ce que** la plaque de guidage réglable (16) peut être bloquée dans sa position ouverte dans une plage angulaire comprise entre -10° à 30° autour de l'axe de pivotement (18) par rapport au plan horizontal en direction du dispositif hacheur 6).

5. Dispositif (2) selon l'une des revendications précédentes, **caractérisé en ce que** la plaque de guidage (16) est réglée obliquement par rapport à la verticale à un angle de 10° à 30° s'ouvrant dans la direction d'éjection de la céréale hachée depuis le dispositif hacheur (8).

6. Dispositif (2) selon l'une des revendications précédentes, **caractérisé en ce que** la plaque de guidage (16) est, dans la position ouverte, au moins à peu près horizontale.

7. Dispositif (2) selon l'une des revendications précédentes, **caractérisé en ce que** la plaque de guidage (16) forme, dans sa position fermée, avec sa surface dirigée vers le dispositif hacheur (6), une surface de guidage qui est réglée par rapport au flux de céréale à un angle avec lequel la céréale récoltée, éjectée par le dispositif hacheur (6), reçoit lors du contact avec la surface de guidage une force impulsionnelle telle que le trajet de déplacement de la céréale récoltée est dévié vers le bas en direction du sol.

8. Dispositif (2) selon l'une des revendications précédentes, **caractérisé en ce que** l'extrémité libre de la plaque de guidage (16), dans sa position fermée, est pivotée vers le haut.

9. Dispositif (2) selon l'une des revendications précédentes, **caractérisé en ce que** la plaque de guidage (16) peut être bloquée, en plus de la position ouverte et de la position fermée, dans une position intermédiaire.

10. Dispositif (2) selon l'une des revendications précédentes, **caractérisé en ce que** la plaque de guidage (16) est réglable à distance par moteur.

11. Dispositif (2) selon l'une des revendications précédentes, **caractérisé en ce que** la plaque de guidage (16) est pivotée par un moteur de la position ouverte dans la position fermée et inversement à des impulsions d'horloge prédéterminées pendant une certaine durée.

12. Dispositif (2) selon l'une des revendications précédentes, **caractérisé en ce que** la plaque de guidage réglable (16) est interrompue dans le zone de dépôt d'andain du dispositif (2).

13. Dispositif (2) selon l'une des revendications précédentes, **caractérisé en ce que** la plaque de guidage réglable (16) comporte une ou plusieurs séparations et les séparations individuelles de la plaque de guidage réglable (16) sont réglables indépendamment les unes des autres.
